# EUROPEAN PATENT SPECIFICATION

(11) **EP 3 683 168 B1**
(45) Date of publication and mention of the grant of the patent: **25.08.2021**
(21) Application number: 20152347.9
(22) Date of filing: 17.01.2020
(51) Int. Cl.: B65D 77/20, B29C 51/26, B29C 65/48

(54) **CONTAINER FOR FOOD PACKAGING, METHOD FOR PRODUCTION AND METHOD FOR PRODUCING A PACKAGE COMPRISING SUCH A CONTAINER**
LEBENSMITTELBEHÄLTER, HERSTELLUNGSVERFAHREN UND HERSTELLUNGSVERFAHREN EINER VERPACKUNG MIT EINEM SOLCHEN BEHÄLTER
CONTENANT ALIMENTAIRE, PROCÉDÉ DE FABRICATION ET PROCÉDÉ DE FABRICATION D'UN EMBALLAGE AVEC CE CONTENANT

(30) Priority: 18.01.2019 IT 201900000779
(43) Date of publication of application: 22.07.2020
(73) Proprietor: SIRAP-GEMA S.p.A., 24126 Bergamo (IT)
(72) Inventor: TIRELLI, Simone, 26015 Soresina (CR) (IT); BOSIO, Luca, 26010 Robecco D'Oglio (CR) (IT)
(74) Representative: Zambardino, Umberto

(56) References cited:
- EP-B1- 2 310 292
- WO-A1-2009/064273
- WO-A1-2012/069050
- WO-A1-2016/071685
- DE-A1- 2 421 936
- GB-A- 845 387
- JP-A- H0 891 437
- JP-A- S59 103 077
- US-A- 3 676 159
- US-A1- 2008 110 549

## Description

### Field of application

According to its more general aspect, the present invention relates to containers made of plastic material and suitable for the packaging of products of various types, preferably but not exclusively food products.

In particular, the present invention relates to a container made of plastic material suitable for the packaging of food products, in which the plastic material of the container comprises preferably, but not exclusively, PET and/or a biodegradable polymer, and a method for the production of this container.

The present invention also relates to a method for the production of a packaging comprising a container as described above and a closure lid applied, preferably in a sealed manner, on the perimetral edge of said container.

### Prior art

It is well known in the food industry to package food products in sealed packages made of plastic material. These packages typically consist of a container, usually in the form of a tray, and a closure lid (usually in the form of film) sealed on the perimetral edge of the container so as to protect the food product contained inside the container.

Frequently, the container and the respective film or closure lid are made of polyethylene terephthalate (PET), usually amorphous PET (APET). This material is preferred owing to its characteristics which make it particularly suitable for the conservation of food products, such as a high transparency and greater impermeability to oxygen than other plastic materials conventionally used for the manufacture of containers, such as polystyrene (PS) and polypropylene (PP).

Depending on the type of food product to be packaged, the seal between the closure lid and the container may satisfy various requirements. In general, the seal must be able to withstand cooling, storage and transportation without the closure lid becoming detached from the tray. For some types of foods, such as fresh meat, the seal must also be fluid-tight (in particular gas-tight) so as to maintain the vacuum or a modified atmosphere originally created inside the container during packaging for a specific number of days for which the food product must be stored before use, while keeping its organoleptic and/or nutritional characteristics substantially unchanged.

Generally, the seal is formed by heating the closure lid and a perimetral edge of the container (also referred to below as sealing edge) on which the closure lid must be sealed at a temperature such as to obtain a certain degree of softening of the plastic material forming the container and the closure lid and by compressing together the closure lid and the perimetral edge of the container for a short period of time. However, if the plastic material forming the container and the closure lid is PET the temperature required for heating is relatively high and this frequently causes deformation of the sealing edge of the container during heat sealing.

Another drawback which arises during heat sealing when the container and the closure lid are both made of PET is that, if the sealing edge of the container is contaminated with an even small amount of food substance, for example meat juice when fresh meat is packaged, the quality of the seal after heat sealing may be poor and in particular not fluid-tight. This means that the seal may not maintain the vacuum or the modified atmosphere created inside the container for the pre-set time period, which results in rapid deterioration of the food product packaged inside the container.

One solution used to overcome the aforementioned drawbacks is that of making both the container and the closure lid of a multilayer material comprising a layer of PET and a sealing layer of plastic material which may be more easily softened compared to PET, such as polypropylene (PP), PS or more typically polyethylene (PE), wherein the sealing layer is laminated or lined by means of extrusion or co-extruded onto the layer of PET. In fact, since the aforementioned plastic materials forming the sealing layer of the container and the closure lid soften during the heat sealing process at a temperature substantially lower than that required for PET, it is possible to obtain a stronger and more resistant seal than that which can be obtained with PET which may have a suitable fluid-tightness even if the sealing edge of the container should be contaminated.

However, the aforementioned solution, while ensuring a suitable seal, drastically reduces the possibility of recycling the production trimmings (or waste) resulting from the thermoforming of the containers. It should be noted in fact that, during thermoforming of the containers, part of the plastic material sheet from which the containers are thermoformed does not form an integral part of the containers and therefore forms production trimmings (or waste). In order to reduce the amount of this waste, the same is normally used again in the process for the extrusion of new sheets of plastic material. However, in the case where multilayer sheets such as those mentioned above are used, the PET is contaminated by the different material of the sealing layer and this causes various problems in the extrusion and thermoforming processes including opaqueness, collapse and weak points in the resultant containers and closure lids. Therefore, the use of multilayer sheets as described above results in a lower quality of the containers and/or an increase in the waste material and consequently the production costs.

Another more recent solution for sealing containers and respective closure lids made of PET involves the formation of a container which is made substantially of PET and which has, applied on its sealing edge, a layer of a suitable adhesive which can be heat-activated before the closure lid is sealed. The adhesive is applied along the entire sealing edge by means of roller coating, spray coating or the like and the seal is formed by compressing the closure lid onto the sealing edge of the container and simultaneously heating this sealing edge so as to activate (melt) the adhesive. Solutions of this type are described for example in the patent applications WO 2011/083342, WO 2012/069050 and WO 2016/071685.

Although this solution is advantageous in terms of a greater recyclability rate of the production waste of the containers, it is not without drawbacks which must be overcome. It should be noted in fact that with the aforementioned coating techniques it is somewhat complicated to apply the layer of adhesive onto the sealing edge without affecting at all the internal side walls of the containers such that if even only a small amount of adhesive is present on these internal side walls there is a concrete possibility of contamination of the food product in the packages obtained from these containers, for example during handling, transportation and/or storage of the packages. Moreover, since in the aforementioned solution of the prior art, the adhesive covers substantially the entire perimetral edge of the container, there is also the concrete possibility that the adhesive which melts during the heat sealing of the closure lid may spill out partly inside the container, thus resulting in the possibility, in this case too, of the packaged food product being contaminated during the following package handling, transportation and/or storage operations.

US 3676159 discloses a refrigerable reclosable container having a tray portion and a lid portion; these tray and lid portions being shaped to accept and remain in contact with the items which are being packaged.

GB 845387 discloses a preserve can for preserves, which has to be subjected to a thermal treatment at temperatures between 80°C and 126°C, distinguished in that its parts, namely the container and lid, consisting of a synthetic plastics material, for example polyolefines, are provided with a groove-and-ridge joint on their rims which are to be joined together by adhesion or welding, and that the upper horizontal rim of the container ends flush with the inside surface of the lid.

JP H0891437 discloses a cup-shaped container having a stable heat-sealing strength and easy peeling of the lid material.

WO 2009/064273 discloses a method for packaging articles in clear plastic clamshell packages of the type having a first portion with an article-receiving cavity, and a lid portion that is hinged to the article-receiving portion. The lid has raised parts or "proud points" or raised male portions extending along its periphery and the other portion has complementary grooves for receiving the proud points.

US2008110549 discloses an assembly comprising a tray providing a tray channel; a lid providing a lid channel, wherein said lid is mateable to said tray such that said respective channels combine to form an assembly duct; and a bonding material received in said assembly duct such that said tray and said lid are bonded to one another.

The main object of the present invention is therefore to provide a container made of thermoplastic material, in particular a material with a high transparency such as PET and the like or a biodegradable material such as polylactic acid or the like, onto which a closure lid may be sealed without encountering the drawbacks mentioned above with reference to the prior art.

A further object of the present invention is to provide a method for the production of a container as described above and a method for the production of a package comprising a container as described above and a closure lid applied onto the perimetral edge of said container, which may be achieved in a simple and low-cost manner.

### Summary of the invention

These and other objects are achieved primarily by a container made of plastic material for packaging products, in particular food products, the container comprising a bottom, side walls and a peripheral edge extending substantially along the entire perimeter of the container, said peripheral edge having a cavity having a substantially perimetral extension and open upwards, characterized in that the container further comprises an adhesive layer in the form of a bead that fills the cavity formed in the peripheral edge and projects above it, said adhesive being an adhesive that can be activated with heat and having a softening or melting point lower than that of the plastic material of the container.

In one embodiment, the peripheral edge has a groove with a perimetral extension formed integrally on the peripheral edge of the container, the groove defining the aforementioned cavity for containing the aforementioned adhesive layer. Preferably, the groove is spaced, in the direction of the width of the peripheral edge, from the internal perimetral end of said peripheral edge (or mouth of the container). Preferably, the groove with a perimetral extension forming the aforementioned cavity is formed in a perimetral extension area substantially central in the direction of the width of the peripheral edge. The scope of the present invention however may also include embodiments in which the aforementioned groove forming said cavity is situated off-centre in the direction of the width of the peripheral edge, in particular towards the inside or mouth of the container for example in the case where the edge has a relatively large width.

In another embodiment, the peripheral edge has a pair of parallel ribs projecting upwards and extending substantially along the entire perimeter of the edge, the parallel ribs defining internally and delimiting the aforementioned cavity for containing the adhesive layer. Preferably, the parallel ribs projecting upwards are spaced from the internal perimetral end of the peripheral edge (or mouth of the container) and in particular they are formed in a substantially central area in the direction of the width of the peripheral edge (or alternatively they may be situated off-centre if the edge has a relatively large width).

In one embodiment, the plastic material forming the container comprises or consists of PET, polypropylene (PP) or polystyrene (PS).

In another embodiment, the container is made of plastic material comprising or consisting of PET. Preferably, the PET may be an amorphous PET (APET) or a semi-expanded or expanded PET (XPET). The container may be made in the form of a monolayer or multilayer of one or more of the aforementioned materials.

In another embodiment, the container is made of a biodegradable polymer comprising or consisting of polylactic acid (PLA) or the like. The container may be made in the form of a monolayer or multilayer of the aforementioned biodegradable polymer comprising or consisting of PLA.

The aforementioned objects are also achieved by a method for the production of a container as above comprising:
- forming a container made of plastic material for the packaging of products, in particular food products, the container comprising a bottom, side walls and a peripheral edge extending substantially along the entire perimeter of the container.
- forming in said peripheral edge a cavity having a substantially perimetral extension and open upwards.
- filling said cavity with an adhesive layer in the form of a bead that fills the cavity formed in the peripheral edge and projects above it, said adhesive being an adhesive that can be activated with heat and having a softening or melting point lower than that of the plastic material of the container.

Preferably, filling of the cavity is carried out by applying adhesive into said cavity by means of an automated adhesive dispensing system (metering device) which is movable along the perimeter of the cavity of the peripheral edge of the container.

The aforementioned objects are also achieved by a method for producing a package comprising:
- providing a container as described above in which the cavity of the peripheral edge is filled with an adhesive layer;
- joining, preferably by sealing, a closure lid onto the peripheral edge of the container by compressing together the closure lid and the peripheral edge of the container and simultaneously activating (melting) the adhesive by applying heat.

Further characteristic features and advantages of the present invention will emerge more clearly from the description below which is provided by way of a non-limiting example also with reference to the attached drawings provided.

### Brief description of the drawings

In the attached drawings:
- Figure 1 shows an exploded perspective view of a container according to a first embodiment of the invention;
- Figure 2 shows a side view of the container according to Figure 1;
- Figure 3 shows a view, on a larger scale, of a detail of the container according to Figure 2;
- Figure 4 shows a side view of a container according to a second embodiment of the invention;
- Figure 5 shows a view, on a larger scale, of a detail of the container according to Figure 4;
- Figure 6 shows a side view of a container according to a third embodiment of the invention;
- Figure 7 shows a view, on a larger scale, of a detail of the container according to Figure 6;
- Figure 8 shows an exploded perspective view of a package according to the invention comprising the container according to Figure 1 and a closure lid;
- Figure 9 show a scheme of equipment comprising a station for dispensing an adhesive along the edge of thermoformed containers for the production of respective containers according to the invention.

### Detailed description

Below in the present description, the terms "upper", "lower", "outer" and "inner" refer to the orientation of a particular embodiment as shown in the respective figures.

Moreover, in the present description, it must be understood that the technical characteristics specifically described above and hereinbelow may be combined with each other in any way, forming further embodiments of the present invention which are not described specifically for reasons of conciseness, but which fall within the scope of the present invention.

In the present description, the term "PET" or "polyethylene terephthalate" is understood as meaning a polymer material consisting essentially of polyethylene terephthalate or comprising polyethylene terephthalate together with a co-monomer. In particular, the PET may be a PET which is essentially or substantially amorphous in the sense that it is obtained and/or machined from a raw material of crystalline PET (CPET) or amorphous PET (APET) using suitable measures, known per se in the art, in order to reduce to a minimum the crystallinity which to a certain extent always occur within the material. These measures may include for example choosing a suitable type of PET depending on the monomer content of the material and reducing as far as possible the time during which the material may be in the production process at a temperature where a high crystallization speed occurs. Alternatively, the PET may be of the semi-expanded or expanded type (XPET).

Preferably, the co-monomer is chosen from the group consisting of isophthalic acid (IPA), cyclohexanedimethanol (CHDM) and diethylene glycol.

Moreover, the PET for use in the present invention comprises virgin PET (i.e. newly produced directly from a fossil source), recycled PET (r-PET) for example obtained from post-consumer PET, recyclable PET in particular obtained from thermoforming waste, and combinations thereof.

In the present description, "biodegradable polymer" is understood as meaning any polymer which has characteristics suitable for use in the production of packaging containers and which, after its working life, may be degraded by microorganisms (bacteria and/or fungi) for example in water, natural gases, such as carbon dioxide and methane, and/or in biomass. Preferably, the biodegradable polymer for use in the present invention is polylactic acid (PLA). In particular, the biodegradable polymer material may also be compostable, namely it is a biodegradable polymer material, at least 90% of which, during an industrial composting process (at 55-60°C), disintegrates within a period of 3 months (EN 13432), decomposing within six months into CO₂, water and minerals, without releasing toxic substances into the compost.

Moreover the biodegradable material, for example PLA, may be virgin (i.e. newly produced), recyclable, for example obtained from thermoforming waste, or a combination thereof.

In the present invention "closure lid" is understood as meaning any lid made of thermoplastic material, generally in the form of a film, which may be applied, in particular by means of heat sealing, onto the edge of a container so as to close the same, in particular in a fluid-tight manner.

In the present invention, the adhesive may be any polymer-based adhesive which can be activated with heat, namely a polymer adhesive which is solid at room temperature and which reaches a fluid state at a higher temperature, in particular by means of the application of heat. In particular, the adhesive has a softening or melting point lower than that of the plastic material of the container so that heat sealing of the closure lid may be performed at a temperature such as not to deform the container.

In particular, adhesives which are suitable for use in the present invention may have the following characteristics:
Working temperature (melting in tray): 170 - 200°C
Softening point: > 90°C
Open time: 1-3 seconds
Viscosity: 3000-20,000 Cp at 180°C

Examples of adhesives suitable for use in the present invention comprise adhesive materials based on polyethylene (PE), copolymers of PE, terpolymers of PE and mixtures thereof and waxes, for example petroleum waxes. Preferably, the adhesive comprises copolymers and terpolymers of PE, as well as a wax. This is advantageous both in terms of a suitable melting point of the adhesive and in terms of obtaining a suitable fluid-tight seal when the closure lid or film is applied onto the perimetral edge of the container.

Moreover, in the case where the container is made of a biodegradable thermoplastic material such as polylactic acid or the like, the adhesive may have advantageously characteristics of compatibility with the material of the container so as to preserve its biodegradability and where possible its compostable nature in accordance with the existing regulations. For example, the adhesive for this application may also be biodegradable and where possible compostable.

In the present invention, the container may be a single layer (monolayer) or multilayer of plastic material chosen from among the materials mentioned above and may be obtained in the desired form and dimensions by means of a common thermoforming technique from an extruded sheet of the plastic material.

The single layer or monolayer may consist for example of a virgin plastic material (such as virgin PET or virgin PLA) or a recyclable plastic material such as r-PET obtained for example from post-consumer bottles optionally deprived in a conventional manner from impurities that may negatively affect the process for production of the container according to the invention and/or the characteristics of the final container.

In the case of multilayer containers, a preferred configuration is a triple-layer container (ABA) in which the outer layer and the inner layer are both made of a virgin plastic material, while the middle layer is formed by a mixture consisting of a virgin and recyclable plastic material.

For example, in the case where PET is used, a multilayer ABA container may have the outer layer and the inner layer which are both made of 100% virgin PET, while the middle layer is a mixture consisting of virgin PET and r-PET in which the percentage of virgin PET varies from 10% to 40%.

Alternatively, in the case where PLA is used, a multilayer ABA container may have the outer layer and the inner layer which both consist of 100% virgin PLA, while the middle layer is a mixture consisting of 70% virgin PLA and 30% recyclable PLA (i.e. derived from thermoforming waste).

The thermoformed container has a bottom, side walls and a peripheral edge, also called sealing edge, the upper side of which forms the surface used for sealing the closure lid by means of the adhesive.

In accordance with the present invention, the peripheral edge has a cavity with a substantially perimetral extension which is open upwards, namely on the upper side of the peripheral edge which is used for sealing with the closure lid.

The cavity may be formed preferably integrally with the peripheral edge of the container, for example by plastically deforming the peripheral edge in a preferably central area thereof and along substantially the entire perimeter of the edge so as to form in said area a cavity open upwards and extending substantially along the entire perimeter of the edge. The aforementioned deformation of the peripheral edge may be performed advantageously during thermoforming inside the container thermoforming mould, for example by modifying the bottom part of the mould so as to create a perimetral recess in the zone for formation of the perimetral edge of the container and the top part of the mould so as to create a perimetral projection which, when the mould is closed, engages in the perimetral recess of the bottom mould.

Alternatively, deformation of the peripheral edge of the container may be performed after thermoforming, for example by means of punching of the peripheral edge using suitable apparatus which are connected with the thermoforming machine in-line or off-line.

In accordance with another aspect of the present invention, once the cavity has been formed on the peripheral edge of the container the cavity is filled with an adhesive layer of the aforementioned type.

Filling of the cavity may be performed using any suitable system and preferably by means of an automated adhesive dispensing system (metering device). This system may be incorporated in a dispensing station which receives the containers supplied from the thermoforming station. The automated metering device may comprise a hopper for loading the adhesive and may have at least one metering unit movable above and along the entire perimeter of the cavity of each single container or group of containers remaining for a predetermined time inside the dispensing station so as to release a predefined quantity of adhesive such as to fill the cavity. The at least one metering unit may be operated by a motor controlled by a command and control unit which adjusts the operation thereof in particular as regards the movement around the cavity in synchronism with the arrival and temporary stoppage of the containers inside the dispensing station and the release of adhesive therein.

The application of the adhesive may be performed by heating the adhesive to a temperature such as to soften it and allow it to flow from the metering unit to the cavity in the peripheral edge of the container. For this purpose, the automated metering device may be provided (for example in the at least one metering unit) with suitable heating means for keeping the adhesive to be applied at a suitable temperature.

Advantageously, the adhesive layer is applied in the form of a bead of adhesive which fills the cavity formed on the peripheral edge along its entire perimeter and projects from the top thereof.

It has been surprisingly discovered that, by forming a cavity with a perimetral extension for containing the adhesive along the sealing edge of the container, it is possible to apply and confine the adhesive in a simpler and easier manner in a predefined perimetral area of the sealing edge without thereby preventing the formation of a good-quality seal between the container and the closure lid when the closure lid is applied onto the peripheral edge of the container by means of heat sealing.

In this way, advantageously it is possible to avoid spillage and/or dispersion of the adhesive towards the inside of the container both during application of the adhesive onto the peripheral edge of the container and subsequently during application of the closure lid onto the peripheral edge by means of heat sealing, thereby preventing the possibility of contamination of the packaged product inside the final package obtained by the container.

Owing to the fact that the adhesive is confined within a predefined area of the sealing edge of the container instead of being spread over the entire edge as instead occurs in the prior art, the containers according to the invention also have improved transparency characteristics along/near of the edge and recycling properties. The adhesive is also less visible for the user or end consumer in the containers according to the invention.

The present invention is therefore particularly suitable for the production of containers made of a plastic material which cannot be effectively sealed by means of direct heat sealing with the material of the closure lid, for example owing to the high melting point of the plastic material and/or the occurrence of deformations or breakages along the peripheral edge during heat sealing, and which therefore requires the insertion of an adhesive layer between the peripheral edge of the container and the closure lid in order to achieve this seal.

These containers, of the monolayer or multilayer type, may be made both of a material such as PET (or comprising PET) which is a plastic material widely used in the packaging sector, in particular owing to its good transparency and recycling characteristics, and of a biodegradable and optionally compostable polymer, such as polylactic acid (PLA), which may require the presence of an adhesive layer in order to provide the seal between the peripheral edge of the container and the closure lid, should the material of the closure lid be made of a different material such as PET or other polymers.

In the present invention, the closure lid is made of plastic material and, depending on the application and the characteristics required for the final package, it may be relatively rigid and stable or may be flexible, for example in the form of a film.

Suitable materials for the closure lid for use according to the present invention may comprise polypropylene (PP), polyethylene (PE), PET, biodegradable polymers such as polylactic acid (PLA), etc. The closure lid may be formed as a single layer of plastic material or several layers (multilayer) comprising a sealing layer made for example of PE, PP, polystyrene (PS) including oriented polystyrene (OPS), and a functional layer. The functional layer of the multilayer structure of the closure lid may be chosen in particular from among the aforementioned plastic materials so as to impart specific properties such as strength, resilience, gas-barrier properties, etc.

Sealing of the closure lid together with the sealing edge of the container may be performed by means of heat sealing techniques which are conventional per se. In this connection, after placing the product to be packaged inside the container, the closure lid is applied onto the sealing edge of the container and pressure and heat are then applied both onto the peripheral edge of the container and onto the closure lid for a period of time sufficient to ensure sealing between the closure lid and the sealing edge of the container by means of the adhesive.

Advantageously, heat sealing may be performed at a temperature higher than the softening point of the adhesive and in any case lower than the softening point of the plastic material of the container so as to activate the adhesive, making it soft/fluid, avoiding at the same time deformation of the sealing edge of the container and achieving also energy savings since sealing may be performed at a lower temperature than that needed to directly seal the sealing edge of the container and the closure lid (i.e. without adhesive in between), while using the same amount of material for the container and the closure lid.

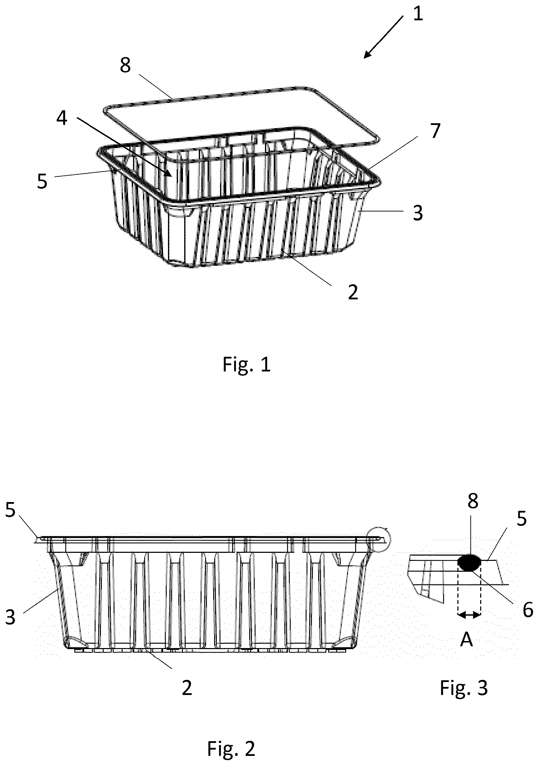

Figures 1-3 show a container according to a first embodiment of the invention which is denoted overall by 1.

The container 1 comprises a bottom 2 and side walls 3 which delimit a compartment 4 for containing a product to be packaged (not shown). The side walls 3 terminate at the top in a peripheral edge 5 projecting outwards and extending substantially along the entire perimeter of the container 1. In accordance with the present embodiment of the invention, the peripheral edge 5 has a groove 6 with a substantially semi-circular cross-sectional form. The groove 6 is formed integrally, for example by means of punching of the peripheral edge 5, and extends substantially along the entire perimeter of the peripheral edge 5 defining a cavity 7 situated below the surface and open upwards. Moreover, the groove 6 is spaced from the mouth of the container 1 and is situated in an area A substantially central in the direction of the width of the peripheral edge 5 of the container 1.

The container 1 also has a bead 8 of adhesive which fills the cavity 7 and projects from the top thereof.

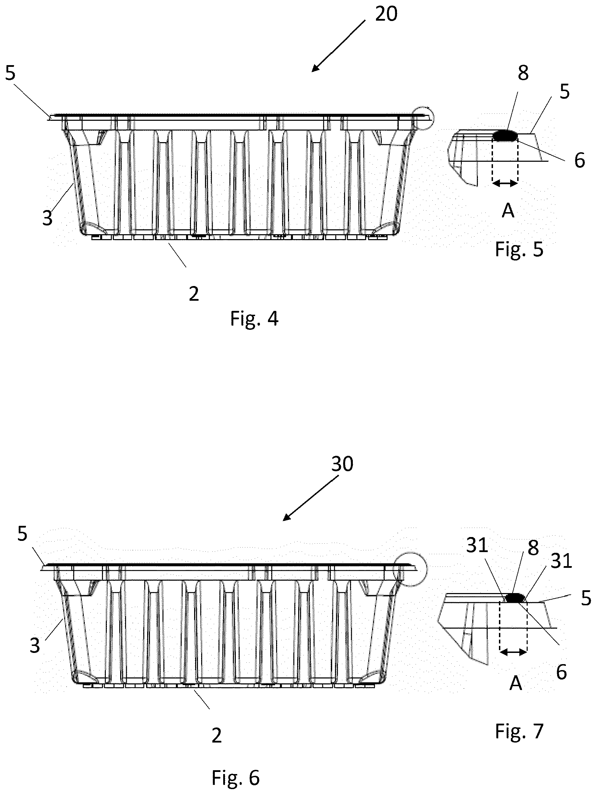

Figures 4, 5 and 6, 7 show respective containers according to further embodiments of the present invention.

The parts of the containers shown in Figures 4, 5 and 6, 7 which are structurally and/or functionally equivalent to corresponding parts of the container shown in Figures 1-3 are indicated by the same reference numbers as the latter.

Figures 4, 5 show a container according to a second embodiment of the invention which is denoted overall by 20. The container 20 differs from the container 1 described above in that the groove 6 which defines the cavity containing the bead 7 of adhesive has a different form, namely a substantially trapezoidal form with edges which are rounded in cross-section.

Figures 6, 7 shows a container according to a third embodiment of the invention which is denoted overall by 30. The container 30 differs from the containers 1 and 20 described above in that the peripheral edge 5 has, instead of the groove 6, a pair of parallel ribs 31 projecting upwards from the surface of the peripheral edge 5 and extending substantially along the entire perimeter of the edge 5. The ribs have a substantially triangular cross-sectional form and define internally and delimit a cavity 7 for containing a bead 8 of adhesive. The parallel ribs 31 projecting upwards are spaced from the mouth of the container 30 and in particular are situated in an area A substantially central in the direction of the width of the peripheral edge 5.

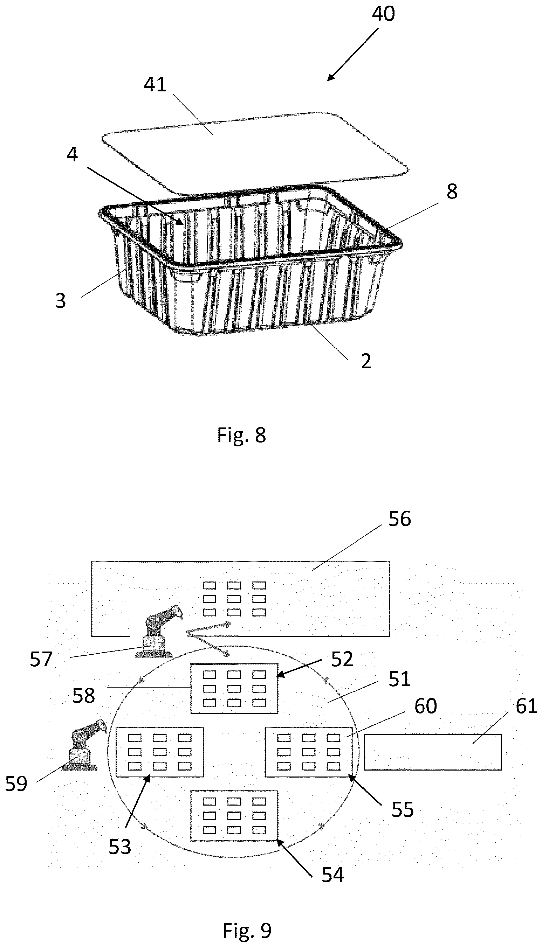

Figure 8 shows a package according to an embodiment of the invention which is denoted overall by 40. The package 40 comprises a container 1 as shown in Figure 1 and a closure lid 41 joined in a sealed manner to the peripheral edge 5 of the container 1 by means of the bead 8 of adhesive by heat sealing.

Figure 9 shows a scheme of equipment comprising a station for dispensing adhesive along the edge of thermoformed containers for the production of respective containers according to the invention.

The equipment comprises a table 51 rotationally movable (in the example anti-clockwise) intermittently between four positions corresponding to a receiving station 52, an adhesive dispensing station 53, a station 54 for drying the adhesive and a stacking station 55.

The receiving station 52 is intended to transfer groups of thermoformed containers coming from a thermoforming machine 56 onto the table 51 for the subsequent operations. In this connection, the receiving station 52 may be provided with at least one gripping robot 57 (picker) operating in synchronism with the output of the thermoforming machine for picking up, at predetermined time intervals, each group of thermoformed containers arranged on a respective support 58 and exiting from the thermoforming machine 56 and for transferring it onto the rotating table 51. The adhesive dispensing station 53 receives intermittently each group of thermoformed containers coming from the receiving station 52 by means of rotation of the table 51 and applies a bead of adhesive along the edge of each container of the group of containers by means of an automated metering device (robot) 59. After a predetermined time necessary for application of the adhesive, each group of thermoformed containers exiting from the dispensing station 53 is transferred to the drying station 54 where the containers of each group remain for a time necessary for drying of the adhesive, which may be performed or accelerated using conventional means (for example hot air). Thereafter, the containers of each group are transferred from the drying station 54 to the stacking station 55 by means of rotation of the table 51, where they are stacked in a conventional manner, for example by means of gripping robots so as to form respective stacks of containers according to the invention. These stacks 60 are then transferred onto a conveyor belt 61 so as to be transported away for storage or some other purpose.

The container and the package according to the invention may be subject to numerous modifications and variations made by a person skilled in art, all of these being moreover included within the scope of protection of the attached claims.

## Claims

1. Container (1;20;30) made of plastic material for packaging products, in particular food products, the container comprising a bottom (2), side walls (3) and a peripheral edge (5) extending substantially along the entire perimeter of the container (1;20;30), said peripheral edge (5) having a cavity (7) having a substantially perimetral extension and open upwards, **characterized in that** the container (1;20;30) further comprises an adhesive layer in the form of a bead (8) that fills the cavity (7) formed in the peripheral edge (5) and projects above it, said adhesive being an adhesive that can be activated with heat and having a softening or melting point lower than that of the plastic material of the container (1;20;30).

2. Container (1;20;30) according to claim 1, wherein the plastic material comprises or is made of PET, polypropylene (PP) and polystyrene (PS).

3. Container (1;20;30) according to claim 2, wherein the plastic material comprises or is made of PET, said PET being selected from an amorphous PET (APET) or a semi-expanded or expanded PET (XPET).

4. Container (1;20;30) according to claim 1, wherein the plastic material comprises or is made of a biodegradable and optionally compostable polymer, said plastic material being preferably polylactic acid (PLA).

5. Container (1;20) according to any one of the preceding claims, wherein the peripheral edge (5) has a groove (6) with a perimetral extension formed integrally on the peripheral edge of the container, the groove defining said cavity (7) for containing said adhesive layer (8).

6. Container (1;20) according to claim 5, wherein said groove (6), in the direction of the width of the peripheral edge (5), is spaced from the internal perimetral end of said peripheral edge (5) and is preferably formed in an area (A) having a perimetral extension that is substantially central in the direction of the width of the peripheral edge.

7. Container (30) according to any one of claims 1 to 4, wherein the peripheral edge (5) has a pair of parallel ribs (31) projecting upwards and extending substantially along the entire perimeter of the edge (5), the parallel ribs defining internally and delimiting said cavity (7) for containing said adhesive layer (8).

8. Container (30) according to claim 7, wherein said parallel ribs (31) projecting upwards are spaced from the internal perimetral end of said peripheral edge (5) and are preferably formed in an area (A) substantially central in the direction of the width of the peripheral edge (5).

9. Method for producing a container (1;20;30) according to any one of the preceding claims, comprising:
- forming a container made of plastic material comprising a bottom (2), side walls (3) and a peripheral edge (5) extending substantially along the entire perimeter of the container,
- forming in said peripheral edge (5) a cavity (7) having a substantially perimetral extension and open upwards,
- filling said cavity (7) with an adhesive layer (8) in the form of a bead (8) that fills the cavity (7) formed in the peripheral edge (5) and projects above it, said adhesive being an adhesive that can be activated with heat and having a softening or melting point lower than that of the plastic material of the container.

10. Method according to claim 9, wherein filling of said cavity (7) is carried out by applying the adhesive layer (8) into said cavity (7) by means of an automated adhesive dispensing system which is movable along the perimeter of the cavity (7) of the peripheral edge (5) of the container.

11. Method for producing a package (40) for packaging products, in particular food products, comprising:
- providing a container (1;20;30) according to any one of claims 1 to 8;
- joining, preferably by sealing, a closure lid (41) onto the peripheral edge (5) of the container by compressing together the closure lid (41) and the peripheral edge (5) of the container and simultaneously activating the adhesive of the adhesive layer by applying heat.

## Patentansprüche

1. Behälter (1; 20; 30) aus Kunststoffmaterial zum Verpacken von Produkten, insbesondere Lebensmitteln, wobei der Behälter einen Boden (2), Seitenwände (3) und einen Umfangsrand (5) aufweist, der sich im Wesentlichen entlang des gesamten Umfangs des Behälters (1; 20; 30) erstreckt, wobei der Umfangsrand (5) einen Hohlraum (7) aufweist, der eine im Wesentlichen perimetrische Ausdehnung hat und nach oben offen ist, **dadurch gekennzeichnet, dass** der Behälter (1; 20;30) ferner eine Klebstoffschicht in Form einer Raupe (8) aufweist, die den in der Umfangskante (5) gebildeten Hohlraum (7) ausfüllt und über diesen hinausragt, wobei der Klebstoff ein Klebstoff ist, der mit Wärme aktiviert werden kann und einen Erweichungs- oder Schmelzpunkt hat, der niedriger als der des Kunststoffmaterials des Behälters (1;20;30) ist.

2. Behälter (1; 20; 30) nach Anspruch 1, wobei das Kunststoffmaterial PET, Polypropylen (PP) und Polystyrol (PS) umfasst oder daraus hergestellt ist.

3. Behälter (1; 20; 30) nach Anspruch 2, wobei das Kunststoffmaterial PET umfasst oder aus PET hergestellt ist, wobei das PET aus einem amorphen PET (APET) oder einem semi-expandierten oder expandierten PET (XPET) ausgewählt ist.

4. Behälter (1; 20; 30) nach Anspruch 1, wobei das Kunststoffmaterial ein biologisch abbaubares und gegebenenfalls kompostierbares Polymer umfasst oder daraus hergestellt ist, wobei das Kunststoffmaterial vorzugsweise Polymilchsäure (PLA) ist.

5. Behälter (1; 20) nach einem der vorhergehenden Ansprüche, wobei der Umfangsrand (5) eine Nut (6) mit einer Umfangserweiterung aufweist, die einstückig am Umfangsrand des Behälters ausgebildet ist, wobei die Nut den Hohlraum (7) zur Aufnahme der Klebstoffschicht (8) definiert.

6. Behälter (1; 20) nach Anspruch 5, wobei die Nut (6) in Richtung der Breite des Umfangsrandes (5) vom inneren Umfangsende des Umfangsrandes (5) beabstandet ist und vorzugsweise in einem Bereich (A) ausgebildet ist, der eine Umfangserstreckung aufweist, die in Richtung der Breite des Umfangsrandes im Wesentlichen mittig angeordnet ist.

7. Behälter (30) nach einem der Ansprüche 1 bis 4, wobei der Umfangsrand (5) ein Paar paralleler Rippen (31) aufweist, die nach oben ragen und sich im Wesentlichen entlang des gesamten Umfangs des Randes (5) erstrecken, wobei die parallelen Rippen im Inneren den Hohlraum (7) zur Aufnahme der Klebstoffschicht (8) definieren und begrenzen.

8. Behälter (30) nach Anspruch 7, wobei die parallelen, nach oben ragenden Rippen (31) vom inneren Umfangsende des Umfangsrandes (5) beabstandet sind und vorzugsweise in einem in Richtung der Breite des Umfangsrandes (5) im wesentlichen zentralen Bereich (A) ausgebildet sind.

9. Verfahren zur Herstellung eines Behälters (1; 20; 30) nach einem der vorhergehenden Ansprüche, umfassend:
• Ausbilden eines Behälters aus Kunststoffmaterial, der einen Boden (2), Seitenwände (3) und einen Umfangsrand (5) aufweist, der sich im Wesentlichen entlang des gesamten Umfangs des Behälters erstreckt,
• Ausbilden eines Hohlraums (7) in der Umfangskante (5), der eine im Wesentlichen umlaufende Ausdehnung hat und nach oben offen ist,
• Füllen des Hohlraums (7) mit einer Klebstoffschicht (8) in Form einer Raupe (8), die den in der Umfangskante (5) gebildeten Hohlraum (7) ausfüllt und über diesen hinausragt, wobei der Klebstoff ein Klebstoff ist, der mit Wärme aktiviert werden kann und einen Erweichungs- oder Schmelzpunkt aufweist, der niedriger als der des Kunststoffmaterials des Behälters ist.

10. Verfahren nach Anspruch 9, wobei das Füllen des Hohlraums (7) durch Auftragen der Klebstoffschicht (8) in den Hohlraum (7) mittels eines automatisierten Klebstoffabgabesystems erfolgt, das entlang des Umfangs des Hohlraums (7) des Umfangsrands (5) des Behälters bewegbar ist.

11. Verfahren zum Herstellen einer Verpackung (40) zum Verpacken von Produkten, insbesondere von Lebensmitteln, umfassend:
• Bereitstellen eines Behälters (1;20;30) nach einem der Ansprüche 1 bis 8;
• Verbinden, vorzugsweise durch Versiegeln, eines Verschlussdeckels (41) mit dem Umfangsrand (5) des Behälters durch Zusammendrücken des Verschlussdeckels (41) und des Umfangsrandes (5) des Behälters und gleichzeitiges Aktivieren des Klebers der Klebeschicht durch Aufbringen von Wärme.

## Revendications

1. Récipient (1 ; 20 ; 30) en matière plastique pour emballer des produits, en particulier des produits alimentaires, le récipient comprenant un fond (2), des parois latérales (3) et un bord périphérique (5) s'étendant sensiblement sur tout le périmètre du récipient (1 ; 20 ; 30), ledit bord périphérique (5) ayant une cavité (7) ayant une extension sensiblement périmétrale et ouverte vers le haut, **caractérisé en ce que** le récipient (1 ; 20 ; 30) comprend en outre une couche adhésive sous la forme d'un cordon (8) qui remplit la cavité (7) formée dans le bord périphérique (5) et qui saille au-dessus de celle-ci, ledit adhésif étant un adhésif qui peut être activé par la chaleur et dont le point de ramollissement ou de fusion est inférieur à celui de la matière plastique du récipient (1 ; 20 ; 30).

2. Récipient (1 ; 20; 30) selon la revendication 1, dans lequel la matière plastique comprend ou est constituée de PET, de polypropylène (PP) et de polystyrène (PS).

3. Récipient (1;20;30) selon la revendication 2, dans lequel la matière plastique comprend ou est constituée de PET, ledit PET étant choisi parmi un PET amorphe (APET) ou un PET semi-expansé ou expansé (XPET).

4. Récipient (1 ; 20; 30) selon la revendication 1, dans lequel la matière plastique comprend ou est constituée d'un polymère biodégradable et éventuellement compostable, ladite matière plastique étant de préférence de l'acide polylactique (PLA).

5. Récipient (1;20) selon l'une quelconque des revendications précédentes, dans lequel le bord périphérique (5) présente une rainure (6) ayant une extension périmétrale et formée intégralement sur le bord périphérique du récipient, la rainure définissant ladite cavité (7) destinée à contenir ladite couche adhésive (8).

6. Récipient (1 ; 20) selon la revendication 5, dans lequel ladite rainure (6), dans la direction de la largeur du bord périphérique (5), est espacée de l'extrémité périmétrale interne dudit bord périphérique (5) et est de préférence formée dans une zone (A) ayant une extension périmétrale qui est sensiblement centrale dans la direction de la largeur du bord périphérique.

7. Récipient (30) selon l'une quelconque des revendications 1 à 4, dans lequel le bord périphérique (5) a une paire de nervures parallèles (31) saillant vers le haut et s'étendant sensiblement sur tout le périmètre du bord (5), les nervures parallèles définissant intérieurement et délimitant ladite cavité (7) destinée à contenir ladite couche adhésive (8).

8. Récipient (30) selon la revendication 7, dans lequel lesdites nervures parallèles (31) saillant vers le haut sont espacées de l'extrémité périmétrale interne dudit bord périphérique (5) et sont de préférence formées dans une zone (A) sensiblement centrale dans la direction de la largeur du bord périphérique (5).

9. Procédé de fabrication d'un récipient (1 ; 20 ; 30) selon l'une quelconque des revendications précédentes, comprenant les étapes consistant à :
- former un récipient en matière plastique comprenant un fond (2), des parois latérales (3) et un bord périphérique (5) s'étendant sensiblement sur tout le périmètre du récipient,
- former dans ledit bord périphérique (5) une cavité (7) ayant une extension sensiblement périmétrale et ouverte vers le haut,
- remplir ladite cavité (7) avec une couche adhésive (8) sous la forme d'un cordon (8) qui remplit la cavité (7) formée dans le bord périphérique (5) et qui saille au-dessus de celle-ci, ledit adhésif étant un adhésif qui peut être activé par la chaleur et dont le point de ramollissement ou de fusion est inférieur à celui de la matière plastique du récipient.

10. Procédé selon la revendication 9, dans lequel le remplissage de ladite cavité (7) est réalisé en appliquant la couche d'adhésif (8) dans ladite cavité (7) au moyen d'un système automatisé de distribution d'adhésif qui est mobile le long du périmètre de la cavité (7) du bord périphérique (5) du récipient.

11. Procédé de fabrication d'un récipient (40) pour emballer des produits, en particulier des produits alimentaires, comprenant les étapes consistant à :
- fournir un récipient (1 ; 20 ; 30) selon l'une quelconque des revendications 1 à 8;
- relier, de préférence par scellement, un couvercle de fermeture (41) sur le bord périphérique (5) du récipient en comprimant ensemble le couvercle de fermeture (41) et le bord périphérique (5) du récipient et en activant simultanément l'adhésif de la couche adhésive par application de chaleur.
